Europäisches Patentamt

European Patent Office

Office européen des brevets

(19)

(11) EP 0 638 877 B1

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.6: **G07C 5/08**, G01P 7/00

(21) Anmeldenummer: **94112405.9**

(22) Anmeldetag: **09.08.1994**

(54) **Datenerfassungssystem für Fahrzeuge**

Data acquisition system for vehicles

Système de saisie de données pour véhicules

(84) Benannte Vertragsstaaten:
**AT CH DE ES FR GB IT LI NL**

(30) Priorität: **10.08.1993 DE 4326831**

(43) Veröffentlichungstag der Anmeldung:
**15.02.1995 Patentblatt 1995/07**

(73) Patentinhaber:
• **LAUCHT, Horst Dr.**
 **D-83052 Bruckmühl (DE)**
• **Vötterl, Georg**
 **D-83052 Bruckmühl (DE)**

(72) Erfinder:
• **LAUCHT, Horst Dr.**
 **D-83052 Bruckmühl (DE)**
• **Vötterl, Georg**
 **D-83052 Bruckmühl (DE)**

(56) Entgegenhaltungen:
 **DE-A- 3 342 553      DE-A- 4 117 811**
 **DE-C- 4 202 583      US-A- 4 085 363**
 **US-A- 4 928 242**

**Beschreibung**

Die Erfindung bezieht sich auf ein Datenerfassungssystem für Fahrzeuge, z.B. einen Fahrtschreiber, gemäß dem Oberbegriff des Anspruches 1.

**1. Stand der Technik**

Fahrt schreiber sind seit vielen Jahren zur Kontrolle der Sozialvorschriften von Kraftfahrern in Nfz als Kontrollgeräte eingeführt und gesetzlich vorgeschrieben (EG Verordnung: Nr. 3821/85, Bundesverordnung: StVZO § 57a). Darüber hinaus dienen die Fahrtschreiber der Kontrolle der Einhaltung von Verkehrsvorschriften, insbesondere der Einhaltung der gesetzlich vorgeschriebenen Höchstgeschwindigkeit.

In neuerer Zeit werden weitere Kontrollgeräte wie Fuhrpark Management Systeme, Bord Computer, Unfall - Daten - Schreiber am Markt angeboten, die alle bestimmte Fahrdaten aufzeichnen und verarbeiten, insbesondere auch die Geschwindigkeit und den Kilometerstand.

Nun zeigt die Erfahrung, daß an diesen Kontrollgeräten, vor allem aus wirtschaftlichen Gründen, manipuliert wird, um die Einhaltung von vorgeschriebenen Ruhezeiten, aber auch die Einhaltung der gesetzlich vorgeschriebenen Höchstgeschwindigkeit vorzutäuschen. Kein Mittel scheint hierbei zu aufwendig zu sein, als daß es nicht zur Manipulation der Aufzeichnungen verwendet würde, solange eine reelle Chance besteht, daß diese Manipulation unerkannt bleibt.

Für die Kontrolle der Sozialvorschriften bei den Fahrtschreibern bzw. EG - Kontrollgeräten gibt es inzwischen erfolgversprechende Ansätze, Manipulationsversuche erkennbar zu machen und dadurch wirkungsvoll zu verhindern.

Die Manipulation der Geschwindigkeitsaufzeichnung ist ungleich schwerer zu erkennen und kenntlich zu machen. Auch die inzwischen übliche Plombierung aller mechanischen Verbindungen vom Rad bis zur Geschwindigkeitsaufzeichnung konnte keine zuverlässige Manipulationsabwehr bringen. Die neuerlich geforderte Stahlarmierung aller elektrischen Verbindungskabel (EG Verordnung: Nr. 3688/92) bedeutet einen erheblichen zusätzlichen Aufwand, zeigt jedoch die Notwendigkeit der Manipulationsabwehr auch bei der Geschwindigkeitsaufzeichnung.

In den den Stand der Technik kennzeichnenden Schriften sind bereits eine Reihe Weiterbildungen von Datenerfassungs- und Fahrtschreiber - Technologie offenbart:

- Patent DE 31 46 711, Vorrichtung zur Auswertung und Anzeige der Fahrweise eines Kraftfahrzeuges
  Dieses Patent beschäftigt sich mit o.a. Vorrichtung in der Form, daß durch eine Vielzahl von Meßfühlern die Fahrbetriebszustände erfaßt werden, ein Rechner diese Daten auswertet, Warnsignale erzeugt und zur Anzeige bringt, sowie ein austauschbarer externer Speicher diese Daten aufzeichnet. Eine Überwachung der Geschwindigkeitsgeber-Signale auf deren Wahrheitsgehalt ist nicht erwähnt.

- Patentanmeldung DE 32 40 443, Verfahren und Einrichtung zur Aufnahme und Speicherung von eine Geschwindigkeit repräsentierenden Signalen
  Diese Anmeldung beschreibt ein Verfahren zur Aufnahme und Speicherung von Geschwindigkeitsdaten einschl. Geschwindigkeitsüberschreitungen, Dauer dieser Überschreitungen, Durchschnittsgeschwindigkeit, Maximalgeschwindigkeit, und weitere Daten wie Beladezustand, Türkontrolle. Die Fahrererkennung erfolgt mittels Codestecker. Eine Überwachung der Geschwindigkeitsgeber-Signale auf deren Wahrheitsgehalt ist nicht erwähnt.

- Patentanmeldung DE 33 07 523, Fahrtschreiber für Kraftfahrzeuge
  Hierin wird ein Fahrtschreiber auf der Basis bisher üblicher Verfahren beschrieben. Eine Erweiterung erfolgt durch einen Halbleiterspeicher, der bestimmte Ergebnisse löschbar aufzeichnen kann sowie durch einen Diagrammscheibenaufschrieb, der durch ein Auslösesignal in der Aufzeichnungsgeschwindigkeit umschaltbar ist, mit dem Ziel, diesem Fahrtschreiber unfalldatenschreiberähnliche Eigenschaften zu verleihen. Eine Überwachung der Geschwindigkeitsgeber-Signale auf deren Wahrheitsgehalt ist nicht erwähnt.

- Patentanmeldung DE 33 38 113, Datenerfassungssystem für Fahrzeuge
  Das darin beschriebene Gerät enthält neben einem Mikroprozessorsystem eine Anzeigeeinheit, eine Bedieneinheit, einen "Lebendspeicher" (RAM) und einen "Systemspeicher" (ROM, EPROM), wobei zumindest ein Teil des "Lebendspeichers" in einer zur Auswertung entnehmbaren Kassette angeordnet ist. Ein Fahrerausweis in Form einer Datenkarte, auf die zur Überwachung der Vorschriften die Lenk-, Arbeits- und Ruhezeiten aufgezeichnet werden, ist ebenfalls vorgesehen. Eine Überwachung der Geschwindigkeitsgeber-Signale auf deren Wahrheitsgehalt ist nicht erwähnt.

- Patentanmeldung DE 34 07 954, Analysierendes Aufzeichnungs- und Anzeigesystem für Kraftfahrzeuge

Mit diesem System werden Geschwindigkeits- und Verbrauchsmeßdaten erfaßt. Bestimmte Betriebszustände, wie Inbetriebnahme, Fahrtunterbrechungen usw. werden unter Zeitangabe automatisch von einem Drucker ausgegeben. Ein Drucktastenfeld ermöglicht entsprechende Eingaben. Eine Überwachung der Geschwindigkeitsgeber-Signale auf deren Wahrheitsgehalt ist nicht erwähnt.

- Patent DE 35 05 068, Fahrtschreiber für Kraftfahrzeuge

Dieses Patent beschreibt ein Mikroprozessorsystem zur Ermittlung und Aufzeichnung von Fahrdaten (Strecke, Geschwindigkeit) des Fz sowie den Arbeitszeitdaten (Lenkzeit, Ruhezeit usw.) von Fahrer und Beifahrer. Diese werden im Gerät nach Druck auf entsprechende Symboltasten mit den Informationen eines Datum/Uhrzeitgebers verknüpft und auf in den Fahrtschreiber einführbare Datenkarten gespeichert. Eine Druckvorrichtung zum Ausdruck der gespeicherten Daten als "Fahrtprotokoll" und eine Anzeigeeinheit ist ebenfalls vorgesehen. Eine Überwachung der Geschwindigkeitsgeber-Signale auf deren Wahrheitsgehalt ist nicht erwähnt.

- Patentanmeldung DE 35 09 966, Fahrtschreiber für Fahrzeuge

Diese Anmeldung beschreibt ein Verfahren zum Aufzeichnen des Fahrtverlaufes und des Fahrverhaltens eines Landfahrzeuges, indem zusammen mit Uhrzeit und Geschwindigkeit auch der jeweilige Fz-Standort sowie zusätzliche Parameter, wie Abstand zum vorausfahrenden Fz, Verkehrs(zeichen)information usw. gespeichert werden und vom Fz über Funk zu Kontrollzwecken abgerufen werden können. Eine Überwachung der Geschwindigkeitsgeber-Signale auf deren Wahrheitsgehalt ist nicht erwähnt.

- Patentanmeldung DE 38 39 221, Fahrdatenspeicher

Diese Anmeldung beschäftigt sich mit einem Fahrdatenspeicher, der wegproportionale Impulse aufzeichnet. Im Gegensatz zu herkömmlichen Fahrtschreibern werden diese Daten binär abgespeichert und können nur über einen externen Computer ausgewertet und im Klartext ausgedruckt werden. Hier ist zwar explizit eine Manipulationsabwehr angesprochen, eine Überwachung der Geschwindigkeitsgeber-Signale auf deren Wahrheitsgehalt ist nicht erwähnt.

- Patentanmeldung DE 40 22 312, Vorrichtung für Kraftfahrzeuge zur Erleichterung und Überprüfung der Einhaltung von Staßenverkehrsvorschriften

Die beschriebene Vorrichtung ist hierzu mit einem Langzeitspeicher, mit einem sich ständig erneuernden Speicher sowie mit Anzeigeeinrichtungen (optisch, akustisch) für Innen und Außen ausgerüstet. Die Inbetriebnahme des Fz soll ohne Nutzung einer kodierten Identitätsnachweiskarte, die in ein Lese- und Auswertegerät einzuführen ist, nicht in Betrieb genommen werden können. Neben der Aufzeichnung rein fahrphysikalischer Größen sind Sensoren wie z.B. zur Erfassung von Verkehrszeichen, des Fahrbahnzustandes und der Sichtverhältnisse und des Abstandes vor und hinter dem Fz vorgesehen. Eine Überwachung der Geschwindigkeitsgeber-Signale auf deren Wahrheitsgehalt ist nicht erwähnt.

- Patentanmeldung DE 41 08 124, System zur Aufnahme und Analyse von Fahrzeugbewegungsdaten und Aufnahmevorrichtung

Hier wird ein Verfahren beschrieben, welches unter Einführung bestimmter Maximalwerte die Fz-Bewegungsdaten vor der Aufnahme auf ein Speichermedium (z.B. IC-Chipkarte) verdichtet und erst, wenn sie ausgewertet werden sollen, aus dem Speichermedium ausliest, expandiert und analysiert. Eine Überwachung der Geschwindigkeitsgeber-Signale auf deren Wahrheitsgehalt ist nicht erwähnt.

- Patentanmeldung DE 41 16 042, Digitaler Fahrzeugbewegungsaufzeichnungsapparat

Diese Anmeldung beschäftigt sich ergänzend zur Vorgenannten mit der Detektion und Reaktion, wenn der Speicherplatz auf dem Speichermedium, auf dem Fz-Bewegungsdaten aufgezeichnet werden zur Neige geht. Eine Überwachung der Geschwindigkeitsgeber-Signale auf deren Wahrheitsgehalt ist nicht erwähnt.

- Patentanmeldung EP PS 0 150 173, An Apparatus for Recording the Speed of a Vehicle

Diese Anmeldung konzentriert sich auf eine Vorrichtung zur kontinuierlichen Aufzeichnung der Geschwindigkeit eines Fz über eine im voraus bestimmte zurückgelegte Wegstrecke, wobei die Aufzeichnung wegabhängig und nicht zeitabhängig gestaltet wird. Eine Überwachung der Geschwindigkeitsgeber-Signale auf deren Wahrheitsgehalt ist nicht erwähnt.

Keine der zum vorgenannten Stand der Technik gehörenden Schriften offenbart eine Lösung des oben beschriebenen Problems der Manipulationsmöglichkeit und damit Verfälschung der Geschwindigkeitsgeber-Signale eines Datenerfassungssystemes für Fahrzeuge.

Die DE-C-42 02 583 offenbart eine Einrichtung zum Erkennen nicht plausibler, d.h. möglicherweise manipulierter Signale eines Drehwertgebers in einem Fahrzeug mittels eines Bewegungsgebers.

Die DE-A-33 42 553 lehrt, ein Beschleunigungssensor-signal laufend mittels eines Geschwindigkeitssignals aus Radsensoren zu kalibrieren, solange nicht die Gefahr eines Radschlupfs besteht. Sobald das Geschwindigkeitssignal infolge starker Radbeschleunigung oder -verzögerung ungenau zu werden droht, wird die direkte Geschwindigkeitsmessung vorübergehend durch eine Integration des Beschleunigungssignals ersetzt, nicht aber überprüft, da die Geschwindigkeitsmessung in dieser Situation aus physikalischen Gründen ohnehin als unzuverlässig vorausgesetzt wird.

## 2. Aufgabe der Erfindung

Bei der Zusammenstellung aller möglichen Manipulationen an gegenwärtig eingesetzten Datenerfassungssystemen, insbesondere Fahrtschreibern, zeigt sich, daß ein Großteil der Maßnahmen darauf abzielt, das Geschwindigkeitsgeber-Signal durch mechanische, elektrische, oder elektronische Eingriffe in die Übertragungskette zu verändern. Als Folge wird vom Datenerfassungssystem eine zu geringe Geschwindigkeit bzw. Wegstrecke angezeigt und aufgezeichnet.

Ziel eines Datenerfassungssystemes bzw. eines Fahrtschreibers mit erhöhtem Manipulationswiderstand muß es deshalb sein, durch geeignete Gegenmaßnahmen diese Art der Manipulationen auszuschalten oder zumindest für Kontrollorgane erkennbar zu machen.

Es wird also nach einer möglichst einfachen und preiswerten Möglichkeit gesucht, die Informationen des Geschwindigkeitsgebers innerhalb des Datenerfassungssystemes auf deren Wahrheitsgehalt zu überprüfen, um Weiteres veranlassen zu können.

Als Lösung bietet sich an, einen längs zur Fahrtrichtung empfindlichen Beschleunigungssensor einzusetzen, der vor äußerem Zugriff geschützt in das Datenerfassungssystem integriert werden kann.

Wie aus der Literatur hinreichend bekannt und in der praktischen Erprobung von Unfall-Daten-Schreibern UDS immer wieder bestätigt, eignen sich gegenwärtig günstig erhältliche, mit hoher Offset-Drift behaftete Linearbeschleunigungssensoren nur bedingt und unter Zuhilfenahme von EDV zur Verifikation des Geschwindigkeitsgeber-Signals.

Im einfachsten Fall kann durch das sich ändernde Signal am Sensorausgang erkannt werden, daß sich das Fahrzeug in Bewegung setzt, obwohl der Geschwindigkeitsgeber keine Signale liefert.

Liefert der Geschwindigkeitsgeber jedoch verfälschte Signale, so kann selbst bei einem idealen Linearbeschleunigungssensor ohne Offset-Drift wegen der durch die Erdbeschleunigung eingekoppelten Fehler bei Befahren von Steigungen und Gefällen und bei Nicken und Wanken des Fahrzeuges eine kontinuierliche, quantitative Überwachung durch ständige Integration des Beschleunigungssensor-Signales und Vergleich mit dem Geschwindigkeitssignal des Geschwindigkeitsgebers nicht stattfinden.

Der Erfindung liegt nun die Aufgabe zugrunde, ein Datenerfassungssystem der hier genannten Art zu realisieren, das eine Manipulation der Geschwindigkeitsaufzeichnung durch quantitative Untersuchung des Geschwindigkeitsgeber-Signales in unregelmäßigen Zeitabständen sicher erkennt und anzuzeigen oder zu verhindern vermag.

Diese Aufgabe wird durch Hinzunahme der im kennzeichnenden Teil des Anspruches 1 aufgezeigten Maßnahmen bei geringem Aufwand zuverlässig gelöst. In den Unteransprüchen sind Ausgestaltungen und Weiterbildungen angegeben.

## 3. Beschreibung der Erfindung

Beschrieben wird ein Datenerfassungssystem, das mittels eines in Fahrtrichtung des Fahrzeuges messenden Beschleunigungssensors und mittels entsprechender Auswertung des Beschleunigungssensor-Signales sowie dem Vergleich mit den aufgezeichneten Geschwindigkeitsgeber-Signalen in der Lage ist, selbständig eine Manipulation an den Geschwindigkeitsgeber-Signalen zu erkennen und anzuzeigen und gegebenenfalls Maßnahmen einzuleiten.

In der nachfolgenden Beschreibung sind ein entsprechendes Datenerfassungssystem und die Methode zur Auswertung des Beschleunigungssensor-Signales beispielhaft erläutert und in den Figuren skizziert. Es zeigen:

Fig. 1: Blockschemabild eines Datenerfassungssystemes mit Beschleunigungssensor
Fig.2: Zeitdiagramme für die Auswertung der Signale von Beschleunigungssensor und Geschwindigkeitsgeber
Fig.3: Einfaches Ablaufdiagramm zur Erkennung von Manipulationen am Geschwindigkeitsgeber-Signal
Fig.4: Erweitertes Ablaufdiagramm zur Erkennung von Manipulationen am Geschwindigkeitsgeber-Signal

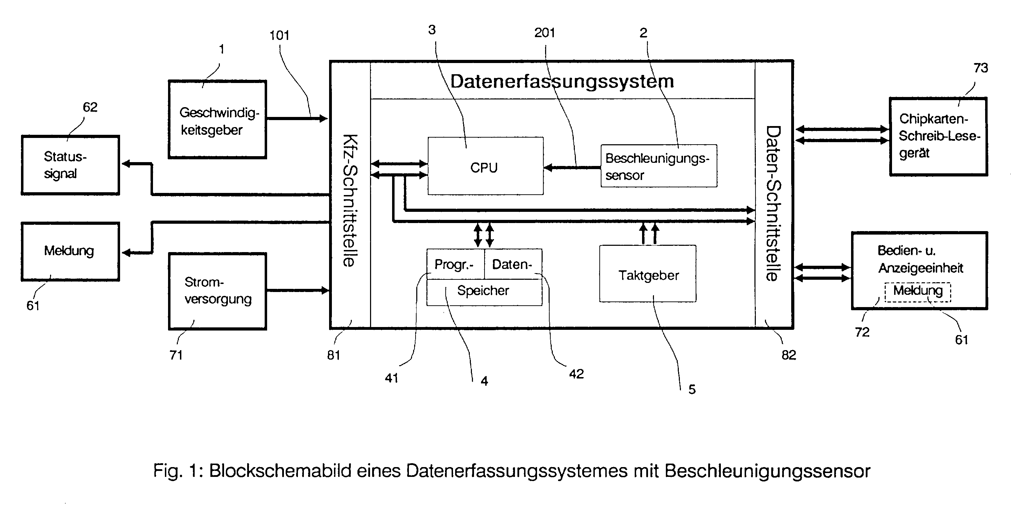

**Datenerfassungssystem mit Beschleunigungssensor** (vergleiche Fig.1)

Das eigentliche Datenerfassungssystem besteht beispielhaft aus einem in Fahrtrichtung messenden Beschleunigungssensor (2), einer zentralen Mikroprozessoreinheit CPU (3), einem Speicher (4) einem Taktgeber (5), sowie einer Kfz-Schnittstelle (81) und einer Datenschnittstelle (82), die gemäß Fig. 1 miteinander verknüpft sind.

Das Meßsignal a (201) des Beschleunigungssensors (2) wird direkt von der CPU (3) verarbeitet, die auch alle anderen Rechenoperationen und Steuerungen vornimmt. Der Speicher (4) ist in Programmspeicher (41), hier sind alle für den Betrieb des Datenerfassungssystemes notwendigen Programme abgelegt, und Datenspeicher (42) aufgeteilt, in dem alle anfallenden Daten des Datenerfassungssystemes gespeichert werden. Der Taktgeber (5) steuert alle Abläufe in der CPU zeitgenau. Die Schnittstellen (81,82) stellen die Verbindungen zur Umgebung des Datenerfassungssystemes her.

Über die Kfz-Schnittstelle (81) wird das externe Signal v (101) des Geschwindigkeitsgebers (1) in das Datenerfassungssystem übertragen. Gleichzeitig ist dieser über dieselbe Schnittstelle mit der Stromversorgung (71) des Kraftfahrzeuges verbunden.

Die Meldung (61) einer Manipulation sowie ggf. ein entsprechendes Statussignal (62) werden vom Datenerfassungssystem beispielhaft über diese Schnittstelle zum Fahrzeug übertragen.

Über die Datenschnittstelle (82) kommuniziert das Datenerfassungssystem mit einer Bedien- und Anzeigeeinheit (72), über die alternativ die Meldung (61) abgegeben werden kann, sowie z.B. mit einem Chipkarten Schreib-Lesegerät (73), in dem eine Fahreridentifikationskarte gelesen und beschrieben werden kann.

### Prinzip der Überprüfung von Manipulationen am Geschwindigkeitsgeber-Signal

Die Überprüfung des Geschwindigkeitsgebers (1) soll immer dann stattfinden, wenn mindestens zwei Bedingungen erfüllt sind:

- In einem ersten Zeitintervall $\Delta t_1$ (511) definierter Länge findet keine Änderung des Geschwindigkeitsgeber-Signales v (101) statt, also der Abstand der Geschwindigkeitsgeberimpulse bleibt konstant oder unendlich groß (d.h. die Geschwindigkeit des Fahrzeugs bleibt konstant oder das Fahrzeug steht) <u>und</u>
- in einem unmittelbar daran anschließenden Zeitintervall $\Delta t_2$ (512) definierter Länge findet eine deutliche Änderung des Beschleunigungssensor-Signales a (201) statt (d.h. das Fahrzeug wird beschleunigt oder abgebremst).

Die erfüllte erste Bedingung erlaubt eine Offsetkorrektur $O_1$ (921) des Beschleunigungssensor-Signales a (201) zu Beginn eines Beschleunigungs-/Bremsvorganges: Ein im Zeitintervall $\Delta t_1$ (511) des mit konstanter Geschwindigkeit fahrenden oder stehenden Fahrzeuges vorhandenes Beschleunigungssensor-Signal a (201) muß zwangsläufig der Gesamt-Offset also die Summe aus Sensor-Offset und durch Neigung eingekoppelter Erdbeschleunigung sein.

Nach dieser Offsetkorrektur $O_1$ (921) läßt sich nun das für das Zeitintervall $\Delta t_2$ (512) eines Beschleunigungs-/Bremsvorganges zur Differenzgeschwindigkeit $\Delta v_{B2}$ (212) aufintegrierte Beschleunigungssensor-Signal a (201) direkt mit der vom Geschwindigkeitsgeber (1) für dieses Zeitintervall $\Delta t_2$ (512) gemeldeten Geschwindigkeitsdifferenz $\Delta v_{W2}$ (112) vergleichen (quantitative Überprüfung).

Überschreitet das Ergebnis dieses Vergleichs als Abweichung A (930) einen vorgegebenen Maximalwert $A_{max}$ (939), ist ein Fehler oder eine Manipulation auf der Geschwindigkeitsgeberseite zu vermuten und es wird im einfachsten Fall eine Meldung (61) abgesetzt.

Um sicherzugehen, daß topologische Einflüsse (Durchfahren einer Senke, Überfahren einer Kuppe usw.) und/oder zu starke Sensor-Drift während der Integration des Beschleunigungssensor-Signales a (201) das Ergebnis nicht verfälschen, ist eine nochmalige Offsetkorrektur $O_3$ (923) am Ende des Beschleinigungs-/Bremsvorganges empfehlenswert:

Dazu ist ein drittes Zeitintervall $\Delta t_3$ (513) definierter Länge nötig, das unmittelbar an das zweite $\Delta t_2$ (512) anschließt und in dem keine Änderung des Geschwindigkeitsgeber-Signales v (101) stattfindet, sodaß durch Mittelwertbildung der Offsets $O_1$, $O_3$ (921,923) aus dem ersten und dem dritten Intervall $\Delta t_1$, $\Delta t_3$ (511,513) eine genauere Offsetkorrektur $O_{mitt}$ (925) vorgenommen werden kann.

Die Genauigkeit der beschriebenen Methode hängt von den zugelassenen Toleranzen ab und kann mit Hilfe der Statistik noch weiter erhöht werden, indem nach Eliminierung von "Ausreißern" der Mittelwert der Abweichungen $A_{mitt}$ (935) über eine Anzahl von oben beschriebenen Messungen gebildet wird.

Durch die erreichbare hohe Genauigkeit dieses Verfahrens ist ein permanentes "Nachkalibrieren" des Datenerfassungssystemes durch Neuskalierung des Meßsignales v (101) des Geschwindigkeitsgebers (1) möglich.

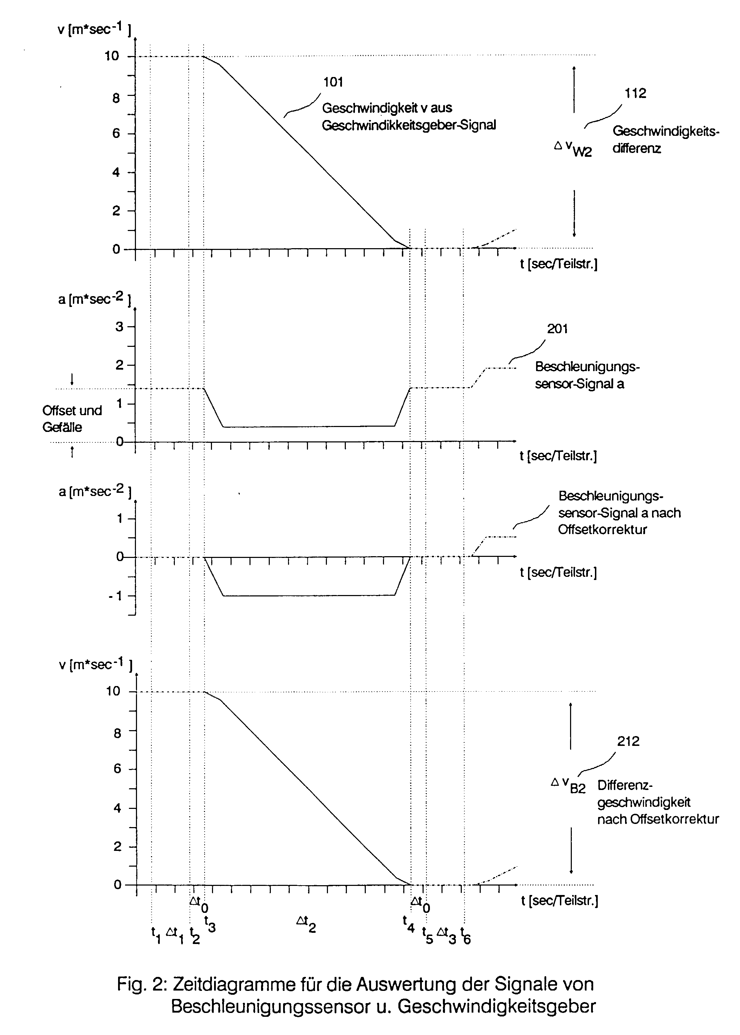

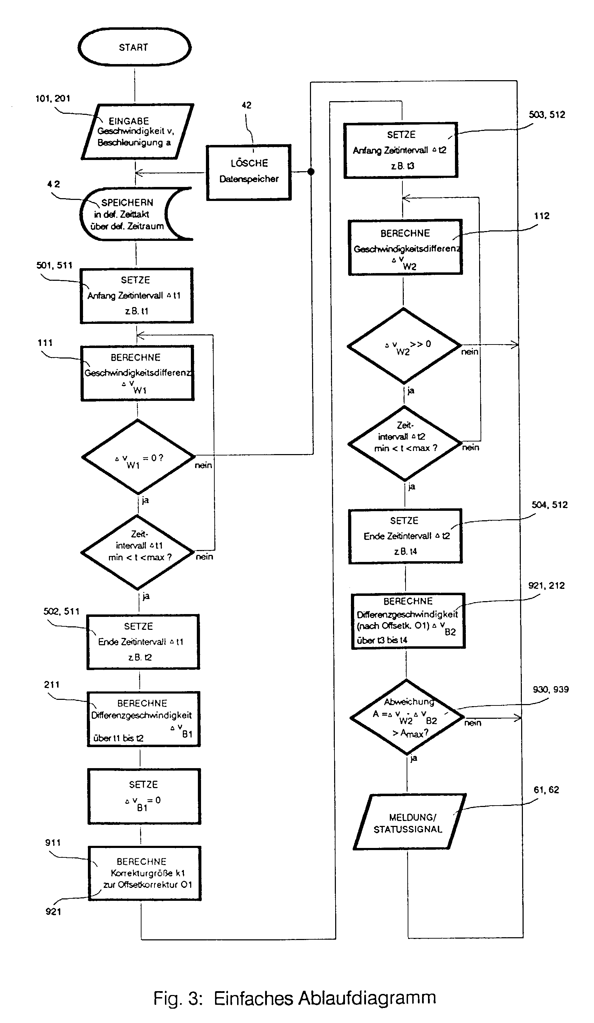

### Überprüfung von Manipulationen am Geschwindigkeitsgeber-Signal, einfacher Ablauf (vergleiche Fig. 2 und Fig. 3)

- Start Sequenz

- Das System zeichnet in einem definierten Zeittakt über einen definierten Zeitraum die Signale des Geschwindig-

EP 0 638 877 B1

keitsgebers v (101) und das Beschleunigungssensor-Signal a (201) im Datenspeicher (42) auf

- setzt im Datenspeicher (42) den Anfang des ersten Zeitintervalles $\Delta t_1$ (511) mit Zeitpunkt $t_1$ (501) fest

- berechnet die Geschwindigkeitsdifferenz $\Delta v_{W1}$ (111) innerhalb des Zeitintervalles $\Delta t_1$ (511) zum Zeitpunkt $t_x$ (507)

$$\Delta v_{W_1} = v_x - v_1$$

- überprüft $\Delta v_{W1}$ (111) auf 0 (Fahrzeuggeschwindigkeit ist 0 oder konstant):

$$\Delta v_{W1} \overset{?}{=} 0$$

Wenn nein, den Datenspeicher (42) löschen, die Aufzeichnung neu starten;
wenn ja, fortfahren

- überprüft, ob das Zeitintervall $\Delta t_1$ (511) eine definierte Länge erreicht hat:
Wenn nein, $\Delta v_{W1}$ (111) weiter berechnen;
wenn ja, fortfahren

- setzt im Datenspeicher (42) das Ende des ersten Zeitintervalles $\Delta t_1$ (511) mit Zeitpunkt $t_2$ (502) fest

- berechnet durch Integration des Beschleunigungssensor-Signales a (201) im gleichen Zeitintervall $\Delta t_1$ (511) über $t_1$ bis $t_2$ die Differenzgeschwindigkeit $\Delta v_{B1}$ (211)

$$\Delta v_{B1} = \int_{t_1}^{t_2} a(t)dt$$

- setzt $\Delta v_{B1} = 0$ und berechnet die Korrekturgröße $k_1$ (911) zur Offsetkorrektur $O_1$ (921)

$$\Delta v_{B1} \overset{!}{=} 0 = \int_{t_1}^{t_2} [a(t) - k_1]dt$$

- setzt im Datenspeicher (42) den Anfang des zweiten Zeitintervalles $\Delta t_2$ (512) mit Zeitpunkt $t_3$ (503) fest

- berechnet die Geschwindigkeitsdifferenz $\Delta v_{W2}$ (112) innerhalb des Zeitintervalles $\Delta t_2$ (512) zum Zeitpunkt $t_y$ (508)

$$\Delta v_{W_2} = |v_y - v_3|$$

- überprüft $\Delta v_{W2}$ (112) auf >> 0 (Beschleunigungs-/Bremsvorgang):

$$\Delta v_{W2} \overset{?}{\gg} 0$$

Wenn nein, den Datenspeicher (42) löschen, die Aufzeichnung neu starten;
wenn ja, fortfahren

- überprüft, ob das Zeitintervall $\Delta t_2$ (512) eine definierte Länge erreicht hat:
Wenn nein, $\Delta v_{W2}$ (112) weiter berechnen;
wenn ja, fortfahren

6

- setzt im Datenspeicher (42) das Ende des zweiten Zeitintervalles $\Delta t_2$ (512) mit Zeitpunkt $t_4$ (504) fest

- berechnet durch Integration des offsetkorrigierten Beschleunigungssensor-Signales im gleichen Zeitintervall $\Delta t_2$ (512) über $t_3$ (503) bis $t_4$ (504) die Differenzgeschwindigkeit $\Delta v_{B2}$ (212)

$$\Delta v_{B2} = \int_{t_3}^{t_4} [a(t) - k_1] dt$$

- prüft, ob die Abweichung A (930) aus der Differenz von $\Delta v_{W2}$ (112) und $\Delta v_{B2}$ (212) den vorgegebenen Maximalwert $A_{max}$ (939) überschreitet:

$$A = \Delta v_{W2} - \Delta v_{B2}$$

$$|A| \overset{?}{>} A_{max}$$

Wenn nein, den Speicher löschen, die Aufzeichnung neu starten;
wenn ja, eine Meldung (61) absetzen und/oder ein Statussignal (62) abgeben, den Datenspeicher (42) löschen, die Aufzeichnung neu starten

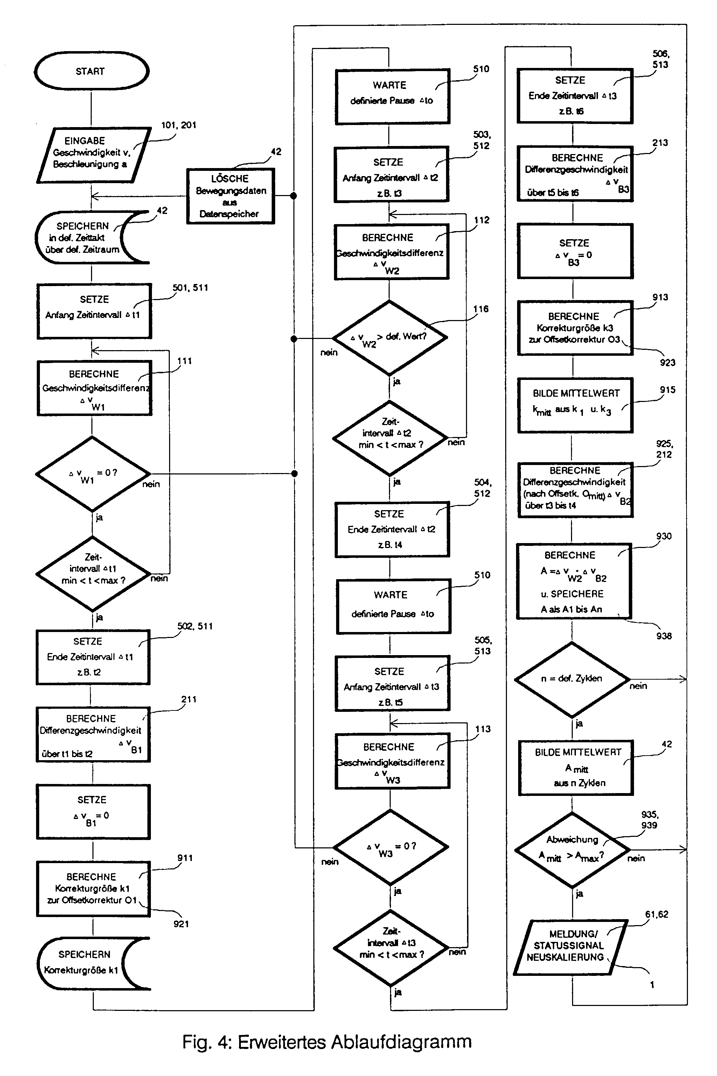

**Überprüfung von Manipulationen am Geschwindigkeitsgeber-Signal, erweiterter Ablauf** (vergleiche Fig. 2 und Fig. 4)

- Start Sequenz

- Das System zeichnet in einem definierten Zeittakt über einen definierten Zeitraum die Signale des Geschwindigkeitsgebers v (101) und das Beschleunigungssensor-Signal a (201) im Datenspeicher (42) auf

- setzt im Datenspeicher (42) den Anfang des ersten Zeitintervalles $\Delta t_1$ (511) mit Zeitpunkt $t_1$ (501) fest

- berechnet die Geschwindigkeitsdifferenz $\Delta v_{W1}$ (111) innerhalb des Zeitintervalles $\Delta t_1$ (511) zum Zeitpunkt $t_x$ (507)

$$\Delta v_{W1} = v_x - v_1$$

- überprüft $\Delta v_{W1}$ (111) auf 0 (Fahrzeuggeschwindigkeit ist 0 oder konstant):

$$\Delta v_{W1} \overset{?}{=} 0$$

Wenn nein, den Datenspeicher (42) löschen, die Aufzeichnung neu starten;
wenn ja, fortfahren

- überprüft, ob das Zeitintervall $\Delta t_1$ (511) eine definierte Länge erreicht hat:
Wenn nein, $\Delta v_{W1}$ (111) weiter berechnen;
wenn ja, fortfahren

- setzt im Datenspeicher (42) das Ende des ersten Zeitintervalles $\Delta t_1$ (511) mit Zeitpunkt $t_2$ (502) fest

- berechnet durch Integration des Beschleunigungssensor-Signales a (201) im gleichen Zeitintervall $\Delta t_1$ (511) über $t_1$ (501) bis $t_2$ (502) die Differenzgeschwindigkeit $\Delta v_{B1}$ (211)

$$\Delta v_{B1} = \int\limits_{t_1}^{t_2} a(t)\,dt$$

- setzt $\Delta v_{B1} = 0$ und berechnet die Korrekturgröße $k_1$ (911) zur Offsetkorrektur $O_1$ (921)

$$\Delta v_{B1} \stackrel{!}{=} 0 = \int\limits_{t_1}^{t_2} \big[a(t) - k_1\big]\,dt$$

- speichert Korrekturgröße $k_1$ (911)

- wartet definierte Pause $\Delta t_0$ (510)

- setzt im Datenspeicher (42) den Anfang des zweiten Zeitintervalles $\Delta t_2$ (512) mit Zeitpunkt $t_3$ (503) fest

- berechnet die Geschwindigkeitsdifferenz $\Delta v_{W2}$ (112) innerhalb des Zeitintervalles $\Delta t_2$ (512) zum Zeitpunkt $t_y$ (508)

$$\Delta v_{W2} = \big| v_y - v_3 \big|$$

- überprüft $\Delta v_{W2}$ (112) auf> $\Delta v_{Wmin}$ (116) (Beschleunigungs-/Bremsvorgang):

$$\Delta v_{W2} \stackrel{?}{>} \Delta v_{W\,min}$$

Wenn nein, den Datenspeicher (42) löschen, die Aufzeichnung neustarten;
wenn ja, fortfahren

- überprüft, ob das Zeitintervall $\Delta t_2$ (512) eine definierte Länge erreicht hat:
Wenn nein, $\Delta v_{W2}$ (112) weiter berechnen;
wenn ja, fortfahren

- setzt im Datenspeicher (42) das Ende des zweiten Zeitintervalles $\Delta t_2$ (512) mit Zeitpunkt $t_4$ (504) fest

- wartet definierte Pause $\Delta t_0$ (510)

- setzt im Datenspeicher (42) den Anfang des dritten Zeitintervalles $\Delta t_3$ (513) mit Zeitpunkt $t_5$ (505) fest

- berechnet die Geschwindigkeitsdifferenz $\Delta v_{W3}$ (113) innerhalb des Zeitintervalles $\Delta t_3$ (513) zum Zeitpunkt $t_Z$ (509)

$$\Delta v_{W3} = v_z - v_5$$

- überprüft $\Delta v_{W3}$ (113) auf 0 (Fahrzeuggeschwindigkeit ist 0 oder konstant):

$$\Delta v_{W3} \stackrel{?}{=} 0$$

Wenn nein, den Datenspeicher (42) löschen, die Aufzeichnung neu starten;
wenn ja, fortfahren

- überprüft, ob das Zeitintervall $\Delta t_3$ (513) eine definierte Länge erreicht hat:

Wenn nein, $\Delta v_{W3}$ (113) weiter berechnen;
wenn ja, fortfahren

- setzt im Datenspeicher (42) das Ende des dritten Zeitintervalles $\Delta t_3$ (513) mit Zeitpunkt $t_6$ (506) fest

- berechnet durch Integration des Beschleunigungssensor-Signales a (201) im gleichen Zeitintervall $\Delta t_3$ (513) über $t_5$ (505) bis $t_6$ (506) die Differenzgeschwindigkeit $\Delta v_{B3}$ (213)

$$\Delta v_{B3} = \int\limits_{t_5}^{t_6} a(t)dt$$

- setzt $\Delta v_{B3} = 0$ und berechnet die Korrekturgröße $k_3$ (913) zur Offsetkorrektur $O_3$ (923)

$$\Delta v_{B3} \overset{!}{=} 0 = \int\limits_{t_5}^{t_6} \left[ a(t) - k_3 \right] dt$$

- bildet Mittelwert $k_{mitt}$ (915) aus $k_1$ (911) und $k_3$ (913) zur Offsetkorrektur mit $O_{mitt}$ (925)

$$k_{mitt} = \frac{k_1 + k_3}{2}$$

- berechnet durch Integration des offsetkorrigierten Beschleunigungssensor-Signales im Zeitintervall $\Delta t_2$ (512) über $t_3$ (503) bis $t_4$ (504) die Differenzgeschwindigkeit $\Delta v_{B2}$ (212)

$$\Delta v_{B2} = \int\limits_{t_3}^{t_4} \left[ a(t) - k_{mitt} \right] dt$$

- berechnet die Abweichung A (930) aus der Differenz von $\Delta v_{W2}$ (112) und $\Delta v_{B2}$ (212):

$$A = \Delta v_{W2} - \Delta v_{B2}$$

- speichert A (930) als $A_n$ (938)

- prüft, ob definierte Zyklenzahl n erreicht
  Wenn nein, die aktuellen Bewegungsdaten aus dem Datenspeicher (42) löschen, die Aufzeichnung neu starten;
  wenn ja, fortfahren

- bildet Mittelwert $A_{mitt}$ (935) über die definierte Zyklenzahl n

$$A_{mitt} = \frac{A_1 + \dots + A_n}{n}$$

- prüft, ob die Abweichung $A_{mitt}$ (935) den vorgegebenen Maximalwert $A_{max}$ (939) übersteigt

$$\left| A_{\text{mitt}} \right| \overset{?}{>} A_{\text{max}}$$

Wenn nein, die Aufzeichnung neu starten;

wenn ja, eine Meldung (61) absetzen und/oder ein Statussignal (62) abgeben und/oder das Geschwindigkeitsgeber-Signal (1) neuskalieren, den Datenspeicher (42) löschen, die Aufzeichnung neu starten

| Liste der Bezugzeichen | | | | | |
|---|---|---|---|---|---|
| Geschwindigkeitsgeber | (1) | v Signal | (101) | | |
| | | $\Delta v_{W1}$ | (111) | $\Delta v_{W11}$ | (1111) |
| | | $\Delta v_{W2}$ | (112) | | |
| | | $\Delta v_{W3}$ | (113) | $\Delta v_{W31}$ | (1131) |
| | | $\Delta v_{Wmin}$ | (116) | | |
| Beschleunigungssensor | (2) | a Signal | (201) | | |
| | | $\Delta v_{B1}$ | (211) | | |
| | | $\Delta v_{B2}$ | (212) | | |
| | | $\Delta v_{B3}$ | (213) | | |
| | | $\Delta v_{Bmin}$ | (216) | | |
| CPU | (3) | | | | |
| Speicher | (4) | | | | |
| Progr.speicher | | | (41) | | |
| Datenspeicher | | | (42) | | |
| Taktgeber | (5) | $t_o$ | (500) | | |
| | | $t_1$ | (501) | | |
| | | $t_2$ | (502) | | |
| | | $t_3$ | (503) | | |
| | | $t_4$ | (504) | | |
| | | $t_5$ | (505) | | |
| | | $t_6$ | (506) | | |
| | | $t_x$ | (507) | | |
| | | $t_y$ | (508) | | |
| | | $t_z$ | (509) | | |
| | | $\Delta t_o$ | (510) | | |
| | | $\Delta t_1$ | (511) | | |
| | | $\Delta t_2$ | (512) | | |
| | | $\Delta t_3$ | (513) | | |
| | | $\Delta t_{min}$ | (516) | | |
| | | $\Delta t_{max}$ | (519) | | |
| Meldung | | | (61) | | |
| Statussignal | | | (62) | | |
| Stromversorgung | | | (71) | | |
| Bedien- u. Anzeigeeinheit | | | (72) | | |
| Chipk. Schreib-Lesegerät | | | (73) | | |
| Kfz-Schnittstelle | | | (81) | | |

EP 0 638 877 B1

(fortgesetzt)

| Liste der Bezugszeichen | | | | | |
|---|---|---|---|---|---|
| Daten-Schnittstelle | | (82) | | | |
| Korrekturgröße $k_1$ | | | (911) | | |
| Korrekturgröße $k_3$ | | | (913) | | |
| Korrekturgröße $k_{mitt}$ | | | (915) | | |
| Offsetkorrektur $O_1$ | | | (921) | | |
| Offsetkorrektur $O_3$ | | | (923) | | |
| Offsetkorrektur $O_{mitt}$ | | | (925) | | |
| Abweichung A | | | (930) | | |
| Abweichung $A_{mitt}$ | | | (935) | | |
| Abweichung $A_n$ | | | (938) | | |
| Abweichung $A_{max}$ | | | (939) | | |

## Patentansprüche

1. Datenerfassungssystem für Fahrzeuge, mit einem elektronischen Speichermedium (4), einem zeittaktgesteuerten Mikroprozessor (3) zur Ermittlung der "Strecke" und "Geschwindigkeit" aus Signalen v (101) des Geschwindigkeitsgebers (1), die über einen bestimmten Zeitraum kontinuierlich aufgezeichnet werden, **dadurch gekennzeichnet,**

   daß zur Verifikation der Geschwindigkeitsgeber-Signale v (101) ein in Fahrtrichtung messender Beschleunigungssensor (2) installiert ist, dessen Meßsignale a (201) kontinuierlich über einen bestimmten Zeitraum aufgezeichnet werden, daß aus den Meßsignalen v (101) des Geschwindigkeitsgebers (1) kontinuierlich die Geschwindigkeitsdifferenz $\Delta v_{W1}$ (111) vom Beginn bis zum Ende eines ersten definierten Zeitintervalles $\Delta t_1$ (511) ermittelt wird,
   daß das Meßsignal a (201) des Beschleunigungssensors (2) über dasselbe Zeitintervall $\Delta t_1$ (511) zur Differenzgeschwindigkeit $\Delta v_{B1}$ (211) dieses Intervalles aufintegriert wird,
   daß bei Ermittlung einer Geschwindigkeitsdifferenz $\Delta v_{W1}$ (111) gleich Null die Differenzgeschwindigkeit $\Delta v_{B1}$ (211) für dieses Zeitintervall zu einer Offsetkorrektur $O_1$ (921) des Meßsignales a (201) des Beschleunigungssensors (2) durch Einfügen einer Korrekturgröße $k_1$ (911) rechnerisch gleich Null gesetzt wird,
   daß sodann dem Zeitintervall $\Delta t_1$ (511) ein zweites definiertes Zeitintervall $\Delta t_2$ (512) nachfolgt, innerhalb dessen die Meßsignale a (201) des Beschleunigungssensors (2) unter Berücksichtigung der vorherigen Offsetkorrektur $O_1$ (921) zur Differenzgeschwindigkeit $\Delta v_{B2}$ (212) aufintegriert werden und diese mit der aus den Geschwindigkeitsgeber-Signalen v (101) ermittelten Geschwindigkeitsdifferenz $\Delta v_{W2}$ (112) vom Beginn bis zum Ende desselben definierten Zeitintervalles $\Delta t_2$ (512) verglichen und das Ergebnis als Abweichung A (930) gekennzeichnet wird,
   und daß die Abweichung A (930) bei Überschreiten eines vorgegebenen Maximalwertes $A_{max}$ (939) zur weiteren Verarbeitung im Speichermedium (4) gespeichert und / oder eine Meldung (61) ausgelöst wird.

2. Datenerfassungssystem nach Anspruch 1,
   **dadurch gekennzeichnet,**
   daß aus der Abweichung A (930) bei Überschreiten eines vorgegebenen Maximalwertes $A_{max}$ (939) eine Neuskalierung des Meßsignales v (101) des Geschwindigkeitsgebers (1) berechnet wird.

3. Datenerfassungssystem nach Anspruch 1 oder 2,
   **dadurch gekennzeichnet,**
   daß die Länge der Zeitintervalle $\Delta t_1$, $\Delta t_2$ (511,512) innerhalb eines definierten Zeitraumes zwischen einer minimalen und einer maximalen Zeitdauer $\Delta t_{min}$ (516) bzw. $\Delta t_{max}$ (519) variabel ist.

4. Datenerfassungssystem nach Anspruch 3,
   **dadurch gekennzeichnet,**

11

daß sich an das zweite Zeitintervall $\Delta t_2$ (512) ein drittes Zeitintervall $\Delta t_3$ (513) anschließt, innerhalb dessen die zugehörige Geschwindigkeitsdifferenz $\Delta v_{W3}$ (113) zu Null ermittelt wird,

daß im dritten Zeitintervall $\Delta t_3$ (513), wie im ersten Zeitintervall $\Delta t_1$ (511), eine Offsetkorrektur $O_3$ (923) des Meßsignales a (201) des Beschleunigungssensors (2) bestimmt wird,

und daß zur Erhöhung der Ermittlungsgenauigkeit der Abweichung A (930) der Mittelwert $O_{mitt}$ (925) der Offsetkorrekturen $O_{1,3}$ (921, 923) des Beschleunigungssensor-Signales a (201) aus dem ersten und dritten Zeitintervall $\Delta t_1$ (511), $\Delta t_3$ (513) zugrunde gelegt wird.

5. Datenerfassungssystem nach einem oder mehreren der vorgenannten Ansprüche,
   **dadurch gekennzeichnet,**
   daß zur Erhöhung der Genauigkeit der Offsetkorrekturen $O_1$, $O_3$ (921, 923) im ersten Zeitintervall $\Delta t_1$ (511) und / oder im dritten Zeitintervall $\Delta t_3$ (513) die Geschwindigkeitsdifferenz $\Delta v_{W11}$ bzw. $\Delta v_{W31}$ (1111 bzw. 1131) zusätzlich von Meßpunkt zu Meßpunkt innerhalb des jeweiligen Intervalles $\Delta t_1$, $\Delta t_3$ (511,513) gleich Null ermittelt wird.

6. Datenerfassungssystem nach einem oder mehreren der vorgenannten Ansprüche,
   **dadurch gekennzeichnet,**
   daß zwischen den einzelnen Zeitintervallen $\Delta t_n$ jeweils für einen kurzen, definierten Zeitraum $\Delta t_0$ (510) keine Meßdaten verwendet werden.

7. Datenerfassungssystem nach einem oder mehreren der vorgenannten Ansprüche,
   **dadurch gekennzeichnet,**

   daß die Zeitdauer des ersten und / oder dritten Zeitintervalles $\Delta t_1$ (511)/ $\Delta t_3$ (513) gesteuert wird durch die Bedingung:
   Ermitteln einer Geschwindigkeitsdifferenz $\Delta v_{W1}$, $\Delta v_{W3}$ (111, 113) gleich Null, und daß die Zeitdauer des zweiten Zeitintervalles $\Delta t_2$ (512) gesteuert wird durch die Bedingung:
   Ermitteln einer Geschwindigkeitsdifferenz $\Delta v_{W2}$ (112) und / oder einer Differenzgeschwindigkeit $\Delta v_{B2}$ (212) größer als ein definierter Mindestwert $\Delta v_{Bmin}$ (216).

8. Datenerfassungssystem nach einem oder mehreren der vorgenannten Ansprüche,
   **dadurch gekennzeichnet,**
   daß die ausgelöste Meldung (61) in einem residenten Teil des elektronischen Speichermediums (4) abgespeichert wird und / oder ein Statussignal (62) auslöst, welches andere Systeme zu einer Reaktion veranlaßt und / oder dem Fahrer angezeigt wird.

9. Datenerfassungssystem nach einem oder mehreren der vorgenannten Ansprüche,
   **dadurch gekennzeichnet,**

   daß mehrere Zyklen zur Ermittlung der Abweichung A (930) vom Prozessor (3) abgearbeitet werden
   und daß der Mittelwert $A_{mitt}$ (935) der Abweichungen A (930) bei Überschreiten eines vorgegebenen Maximalwertes $A_{max}$ (939) eine Meldung (61) sowie weitere daraus folgende Maßnahmen auslöst.

10. Datenerfassungssystem nach einem oder mehreren der vorgenannten Ansprüche,
    **dadurch gekennzeichnet,**
    daß mehrere Zyklen zur Ermittlung der Abweichung A (930) sowie der Meldung (61) zeitlich überlappend gleichzeitig vom Prozessor (3) abgearbeitet werden.

**Claims**

1. Data acquisition system for vehicles with an electronic storage medium (4), a time-controlled microprocessor (3) for calculating the distance and speed from signals v (101) from the speed sensor (1) which are recorded continuously over a certain period of time,
   **characterised by the fact**

   that to verify the speed sensor signals v (101) an acceleration meter (2) is installed in the direction of travel whose measurement signals a (201) are recorded continuously over a certain period of time,
   that the speed differential $\Delta v_{W1}$ (111) is calculated continuously using the speed signals v (101) from the speed sensor from the start to the end of an initial defined time interval $\Delta t_1$ (511),
that the measurement signal a (20 1) from the acceleration sensor (2) over the same time interval $\Delta t_1$ (511) is integrated to the differential specd $\Delta v_{B1}$ for this time interval,
that when calculating a speed differential $\Delta v_{W1}$ (111) the differential speed $\Delta v_{B1}$ (211) for this time interval is set to zero for the calculation as an offset correction $0_1$ (921) of the measurement signal a (201) from the acceleration sensor (2) by inserting a correct value $k_1$ (911),
that the time interval $\Delta t_1$ (511) is followed by a second defined time interval $\Delta t_2$ (512) within which the measurement signals a (201) from the acceleration sensor (2) are integrated, taking into account the previous offset correction $0_1$ (921) to the differential speed $\Delta v_{B2}$ (212) and this is compared to the speed differential $\Delta v_{w2}$ (112) found using the speed sensor signals v (101) from the start to the end of the same defined time interval $\Delta t_2$ (512) and the result is marked as a deviation A (930),
and that the deviation A (930), in the event that a defined maximum value $A_{max}$ (939) is exceeded, is saved for further processing in the storage medium (4) and or a message is triggered.

2. Data acquisition system as described in claim 1,
**characterised by the fact**
that the deviation A (930), in the event that a defined maximum value $A_{max}$ (939) is exceeded, is used to rescale the measurement signal v (101) from the speed sensor (1).

3. Data acquisition system as described in claim 1 or 2,
**characterised by the fact**
that that length of the time intervals $\Delta t_1$, $\Delta t_2$ (511, 512) is variable within a defined period of time between a minimum and a maximum period $\Delta_{tmin}$ (5 16) and $\Delta_{tmax}$ (519).

4. Data acquisition system as described in claim 3,
**characterised by the fact**

a third time interval $\Delta t_3$ (513) follows the second time interval $\Delta t_2$ within which the relevant speed differential $\Delta v_{W3}$ (113) is found for zero,
that during the third time interval $\Delta t_3$ (513), as in the first time interval $\Delta t_1$ (511), an offset correction $O_3$ (923) is found for the measurement signal a (201) from the acceleration sensor (2),
and that the mean value $O_{mitt}$ (925) of the offset correction $O_{1,3}$ (921,923) for the acceleration sensor signal a (201) from the first and third time intervals $\Delta t_1$ (511), $\Delta t_3$ (513) is taken as a basis to increase the determination accuracy of the deviation A (930).

5. Data acquisition system as described in one or more of the above claims,
**characterised by the fact**
that to increase the accuracy of the offset correction $O_1$, $O_3$ (921, 923) in the first time interval $\Delta t_1$ (511) and/or in the third time interval $\Delta t_3$ (513) the speed differential $\Delta v_{W11}$ or $\Delta v_{W31}$ (111 or 1131) is also set to zero from measurement point to measurement point within the relevant interval $\Delta t_1$, $\Delta t_3$ (511,513).

6. Data acquisition system as described in one or more of the above claims,
**characterised by the fact**
no measurement data are used between the individual time intervals $\Delta t_n$ for a short, defined period $\Delta t_0$ (510).

7. Data acquisition system as described in one or more of the above claims,
**characterised by the fact**

that the duration of the first and/or third time interval $\Delta t_1$ (511)/$\Delta t_3$ (513) is controlled using the following condition:
Find a speed differential $\Delta v_{W1}$, $\Delta v_{W3}$ (111, 113) equal to zero, and that the duration of the second time interval $\Delta t_2$ (512) is controlled by the following condition :
Find a speed differential $\Delta v_{W2}$ (112) and/or a differential speed $\Delta v_{B2}$ (212) which is greater than a defined minimum value $\Delta v_{Bmin}$ (216).

8. Data acquisition system as described in one or more of the above claims,
**characterised by the fact**
the triggered message (61) is stored in a resident part of the electronic storage medium (4) and/or a status signal

# EP 0 638 877 B1

(62) is triggered which causes other systems to react and/or is displayed to the driver.

9. Data acquisition system as described in one or more of the above claims,
   **characterised by the fact**

   that several cycles are completed by the processor (3) to find the deviation A (930)
   and that the mean value $\Delta_{mitt}$ (935) ofthe deviations A (930), in the event that a defined maximum value $A_{max}$ (939), triggers a message (61) and this also triggers subsequent actions.

10. Data acquisition system as described in one or more of the above claims,
    **characterised by the fact**
    several cycles are completed simultaneously and overlapping in a temporal respect by the processor (3) to find the deviation A (930) and the message (61).


## Revendications

1. Système de saisie de données pour véhicules équipé d'un support d'enregistrement électronique (4) et d'un microprocesseur à commande par cycles de répétition (3) pour la détermination de la "distance" et de la "vitesse" à partir des signaux v (101) du tachymètre (1) enregistrés en continu pendant une période précise,
   **caractérisé par le fait**

   que pour la vérification des signaux du tachymètre v (101), un capteur de l'accélération qui mesure la direction de la marche et dont les signaux de mesure a(201) sont enregistrés en continu pendant une période précise est installé,
   qu'à partir des signaux de mesure v (101) du tachymètre (1), la différence de vitesse $\Delta v_{W1}$ (111) est déterminée en continu depuis le début jusqu'à la fin d'un premier intervalle temps défini $\Delta t_1$ (511),
   que le signal de mesure a (201) du capteur de l'accélération (2) est intégré via le même intervalle temps $\Delta t_1$ (511) à la vitesse différentielle $\Delta v_{B1}$ (111) de cet intervalle,
   que pour la détermination d'une différence de vitesse $\Delta v_{W1}$ (111) égale à zéro, la vitesse différentielle $\Delta v_{B1}$ (211) pour cet intervalle temps est, afin d'opérer une correction de décalage $0_1$ (921) du signal de mesure a (201) du capteur de l'accélération (2), supposée numériquement être égale à zéro par insertion d'une grandeur de correction $k_1$ (911),
   que l'intervalle $\Delta t_1$ (511) est alors suivi d'un second intervalle défini $\Delta t_2$ (512) à l'intérieur duquel les signaux de mesure a (201) du capteur de l'accélération (2) sont intégrés, compte tenu de la correction de décalage précédente $0_1$ (92 1), à la vitesse différentielle $\Delta v_{B2}$ (2 12), cette vitesse étant comparée depuis le début jusqu'à la fin du même intervalle temps défini $\Delta t_2$ (512) avec la différence de vitesse $\Delta v_{W2}$ (111) calculée à partir des signaux du tachymètre v (101) et le résultat obtenu étant caractérisé par l'écart A (930),
   et par le fait que l'écart A (930) est, en cas de dépassement d'une valeur maximale prédéfinie $A_{max}$ (939), enregistré pour traitement ultérieur sur le support d'enregistrement (4) et/ou qu'un signal d'avertissement (61) est déclenché.

2. Système de saisie de données suivant revendication 1
   **caractérisé par le fait**
   qu'à partir de l'écart A (930), en cas de dépassement d'une valeur maximale prédéfinie (939), une nouvelle graduation v (101) du tachymètre est définie.

3. Système de saisie de données suivant revendication 1 ou 2,
   **caractérisé par le fait**
   que la longueur des intervalles temps $\Delta t_1$, $\Delta t_2$ (511,512) à l'intérieur d'une période définie entre une durée minimale et maximale $\Delta t_{min}$ (516) et $\Delta t_{min}$ (519) est variable.

4. Système de saisie de données suivant revendication 3,
   **caractérisé par le fait**

   que le second intervalle temps $\Delta t_2$ (512) est suivi par un troisième intervalle temps $\Delta t_3$ (513) à l'intérieur duquel la différence de vitesse correspondante $\Delta v_{W3}$ (113) est définie comme étant égale à zéro,
   que dans le troisième intervalle temps $\Delta t_3$ (513), comme dans le premier intervalle temps $\Delta t_1$ (511), une cor-

14

rection de décalage $0_3$ (923) du signal de mesure a (201) du capteur de l'accélération (2) est déterminée, et que pour augmenter la précision de la détermination de l'écart A (930), c'est la moyenne $0_{moy}$ (925) des corrections de décalage $0_{1,3}$ (921, 923) du signal du capteur de l'accélération a (201) calculée à partir du premier et troisième intervalle temps $\Delta t_1$ (511), $\Delta t_3$ (513), qui est prise pour base.

5. Système de saisie de données suivant une ou plusieurs des revendications précédentes, **caractérisé par le fait** que pour augmenter la précision des corrections de décalage $0_{1,3}$ (921, 923) dans le premier intervalle temps $\Delta t_1$ (511) et dans le troisième intervalle temps $\Delta t_3$ (513), la différence de vitesse $\Delta v_{W11}$ et $\Delta v_{W31}$ (1111 et (1131) est définie, en supplément, de point de mesure en point de mesure à l'intérieur des intervalles respectifs $\Delta t_1$, $\Delta t_3$ (511, 513), comme étant égale à zéro.

6. Système de saisie de données suivant une ou plusieurs des revendications précédentes, **caractérisé par le fait** qu'entre les différents intervalles temps $\Delta t_n$, aucune donnée de mesure n'est utilisée pendant une courte période respectivement définie $\Delta t_0$ (510).

7. Système de saisie de données suivant une ou plusieurs des revendications précédentes, **caractérisé par le fait**

   que la durée du premier et/ou du troisième intervalle $\Delta t_1/\Delta t_3$ (511, 513) est réglée par la condition:
   Déterminer une différence de vitesse $\Delta v_{W1}$, $\Delta v_{W3}$ (111,113) égale à zéro, et que la durée du second intervalle $\Delta t_2$ (512) est réglée par la condition:
   Déterminer une différence de vitesse $\Delta v_{W2}$ (112) et/ou une vitesse différentielle $\Delta v_{B2}$ (212) supérieure à une valeur minimale définie $\Delta v_{Bmin}$ (216).

8. Système de saisie de données suivant une ou plusieurs des revendications précédentes, **caractérisé par le fait** que le signal déclenché (61) est mémorisé dans une partie résidente du support d'enregistrement électronique et/ou qu'un signal d'état (62) est soit déclenché en provoquant une réaction d'autres systèmes et/ou soit affiché au chauffeur du véhicule.

9. Système de saisie de données suivant une ou plusieurs des revendications précédentes, **caractérisé par le fait**

   que plusieurs cycles sont effectués par le processeur (3) pour la détermination de l'écart A (930), et que la moyenne $A_{moy}$ (935) des écarts A (930) déclenche, en cas de dépassement d'une valeur maximale prédéfinie $A_{max}$ (939), un signal d'avertissement (1) ainsi que d'autres mesures en conséquence.

10. Système de saisie de données suivant une ou plusieurs des revendications précédentes, **caractérisé par le fait** que pour la détermination de l'écart A (930) et du signal (61) plusieurs cycles sont effectués simultanément avec chevauchement dans le temps par le processeur (3).

Fig. 1: Blockschemabild eines Datenerfassungssystemes mit Beschleunigungssensor

EP 0 638 877 B1

Fig. 2: Zeitdiagramme für die Auswertung der Signale von
Beschleunigungssensor u. Geschwindigkeitsgeber

EP 0 638 877 B1

Fig. 3: Einfaches Ablaufdiagramm

18

Fig. 4: Erweitertes Ablaufdiagramm